# EUROPÄISCHE PATENTSCHRIFT

(11) **EP 0 852 589 B1**
(45) Veröffentlichungstag und Bekanntmachung des Hinweises auf die Patenterteilung: **15.11.2000**
(21) Anmeldenummer: 96930010.2
(22) Anmeldetag: 25.09.1996
(51) Int. Cl.: C08B 37/14

(54) **VERFAHREN ZUR HERSTELLUNG VON REINEM GUARKERNMEHL**
PROCESS FOR PRODUCING PURE GUARSEED FLOUR
PROCEDE DE PRODUCTION DE FARINE PURE DE GRAINES DE GUAR

(30) Priorität: 28.09.1995 CH 274395
(43) Veröffentlichungstag der Anmeldung: 15.07.1998
(73) Patentinhaber: Meyhall AG, 8280 Kreuzlingen (CH)
(72) Erfinder: WIELINGA, Willem, Cor, CH-8274 Tägerwilen (CH)
(74) Vertreter: Liebetanz, Michael, Dipl.-Phys.
(86) Internationale Anmeldenummer: CH9600333
(87) Internationale Veröffentlichungsnummer: WO9711974

(56) Entgegenhaltungen:
- GB-A- 2 756
- PATENT ABSTRACTS OF JAPAN vol. 9, no. 12 (C-261) [1735] , 18.Januar 1985 & JP 59 164301 A (MITSUBISHI ACETATE KK), 17.September 1984,

## Beschreibung

Gegenstand der vorliegenden Erfindung ist ein Verfahren zur Herstellung von Guarkernmehl, das, wenn es in Wasser gelöst vorliegt, eine transparente Lösung mit hoher Viskosität ergibt, wobei das Verfahren trotz extensiver Reinigung gute Ausbeuten des reinen Mehls liefert. Transparente, hochvisköse Lösungen aus reinem Guarkernmehl sind vor allem in der Nahrungsmittelindustrie von grosser Bedeutung.

Guarkernmehl findet als Verdickungsmittel im Textil- und Sprengstoffsektor, als Bindemittel in der Papierindustrie, als Flokkungsmittel bei der Erzgewinnung und Hilfsmittel bei der Erdgas- und Erdölförderung, im pharmazeutischen und kosmetischen Bereich, und als Verdickungsmittel, Emulgator und (Co-)Stabilisator im Nahrungsmittelbereich und der Nahrungsmitteltechnologie Verwendung.

In der Pharmazie wird Guarkernmehl zur Sprüheinbettung zum Beispiel von Vitaminen verwendet, um deren Lagerstabilität zu erhöhen. Darüberhinaus garantiert die Verwendung von Guarkernmehl in Sprays eine nahezu monomolekulare Verteilung der Wirkstoffe und eine dadurch verbesserte, gleichmässige Resorption, was im Fall von Asthmamitteln und diversen Antiallergika wünschenswert ist. Durch den ausserordentlich geringen Proteingehalt des reinen Guarkernmehls besteht keine Gefahr für die Ausbildung allergischer Reaktion auf ein diese Substanz enthaltendes Medikament. Weitere Anwendungen auf diesem Gebiet sind die Formulierung von Retardtabletten und als Mittel zur Senkung des Cholesterinspiegels. Im medizinischen Bereich wird Guarkernmehl auch als Emulgator und Stabilisator in Kontrastmitteln verwendet.

Guarkernmehl hat sich unter anderem auch als ideales diätetisches Mittel erwiesen, da seine Bausteine, die sogenannten Galaktomannane, von den menschliche Magen- und Darmenzymen nicht angegriffen werden. Dies ist insofern zu erwarten, da im menschlichen Verdauungssystem bis zum Dickdarm weder β-Mannanasen noch α-Galaktosidasen vorhanden sind, die zur Aufspaltung dieser Bausteine notwendig wären. Da die Bausteine des Guarkernmehls nicht in den menschlichen Stoffwechsel eingehen, ist das Guarkernmehl in keiner Weise als Kalorienträger oder -lieferant anzusehen. Da sich das Guarkernmehl aus völlig neutralen Polysacchariden, d.h. genauer aus Galaktomannanen, zusammensetzt, die weder Uronsäure noch andere ionogene Gruppen aufweisen, stellen sie in physiologischer Hinsicht völlig unbedenkliches Material dar.
Ein weiterer Vorteil im Hinblick auf seine Verwendung als Nahrungsmittelzusatzstoff ist seine völlige Geschmacksneutralität. Es findet Verwendung in kalorien- oder fettreduzierten Nahrungsmitteln oder Getränken, die von dem Konsumenten häufig als "dünn" empfunden werden. Die Zugabe von Guarkernmehl zu diesen Produkten verleiht ihnen ein "sahnigere" Konsistenz. Bei der Herstellung von Fruchtsäften wird Guarkernmehl verwendet, um die Fruchtpulpe gleichmässig zu resuspendieren, in Puddings und Cremes dient es als Verdickungsmittel, in Eiscremes, Milchshakes, Mousse und ähnlichen Produkten als Stabilisator.
Mit herkömmlichen Guarkernmehlpräparaten war nur eine geringe molekulare Wechselwirkung mit dem Biopolymer Xanthan zu verzeichnen. Beim Mischen dieser beiden Kolloide trat zwar eine synergistische Viskositätserhöhung auf, eine spezifische Gelbildung wie im Fall von Carubin, dem Johannisbrotkernmehl und Xanthan trat jedoch nicht auf. Wenn man Mischungen in einem Verhältnis von 1:1 aus dem Guarkernmehl gemäss der Erfindung und Xanthan gemeinsam erhitzt und bei 4°C (Kühlschranktemperaturen) abkühlen lässt, bildet sich ein Gel. Ein Vorteil dieser Kombination aus Guarkernmehl und Xanthan besteht darin, dass das Gel aus diesen beiden Komponenten bei Körpertemperatur schmilzt und sich daher hervorragend zur Herstellung von geleeartigen Lebensmitteln, als Trägersubstanz bei der Verabreichung von Medikamenten in Zäpfchenform und ähnlichem eignet. Guarkernmehl und Xanthan werden darüberhinaus gemeinsam als Costabilisatoren bei der Herstellung von Salatdressings verwendet, da diese Kombination, im Gegensatz zu Guarkernmehl, wenn es allein verwendet wird, säureresistent ist.

Guarkernmehl wird aus dem Endosperm der Guarbohne *(Cyamopsis tetragonobolus)* gewonnen. Guarkernmehl besteht weitgehend aus Galactomannanen, d.h. aus Polysacchariden, deren Hauptkette in 1->4 Richtung durch β-glykosidische Bindungen verknüpft ist und setzt sich aus Mannose zusammen, die über primäre OH-Gruppen mit Galaktose verbunden ist. Das Verhältnis von unsubstituierter zu mit Galaktose substituierter Mannose beträgt ca. 2:1, wobei die substituierten Einheiten nicht streng alternierend, sondern in Zweier- oder Dreiergruppen in den Polygalactomannanmolekülen angeordnet sind. Die Guar-Galactomannane bilden schon in geringen Konzentrationen mit Wasser hochvisköse Lösungen. 1 gewichtsprozentige Lösungen von handelsüblichem Guarkernmehl in Wasser ergeben Viskositäten von ca. 3'000 bis 6'000 mPa.s.

Guar-Galaktomannane werden aufgrund chemischer und physiochemischer Unterschiede in kaltwasserlösliche, heisswasserlösliche und unlösliche Galaktomannane aufgeteilt.

Zur Gewinnung und Reinigung des Guarkernmehls wird die Guar-Saat mechanisch behandelt, wobei ungefähr 35 Teile unreiner Guar-Endospermhälften und ungefähr 60 Teile Guarkeimlingsmehl erhalten werden. Das Guarkeimlingsmehl besteht im wesentlichen aus dem Keim der Saat, der abgeschürften Bohnenschale und kleinen Endospermteilen. Das Endosperm umhüllt den Keim vollständig und wird seinerseits von der Samenschale umschlossen. Eine proteinreiche, aleuronähnliche Zellschicht umhüllt das Endosperm, dessen Zellen eng mit dem Endosperm verzahnt sind. Diese proteinreiche Schicht grenzt an die Samenschale.

Die unreinen Endospermhälften können weiter mechanisch gereinigt werden und liefern Splits von unterschiedlicher Qualität hinsichtlich ihres Proteingehalts, ihrer durch Säure nicht hydrolisierbaren Bestandteile (A.I.R.) sowie des Schalengehalts. Die in Fachkreisen übliche Bezeichnung "Split" ist dem Begriff "Endosperm-hälften" gleichzusetzen.

Obwohl Guarkernmehl als Verdickungsmittel bereits eine breite Anwendung findet, ist es erwünscht, seinen Reinheitsgrad und damit verbunden seine physikalischen und physiologischen Eigenschaften zu verbessern. Insbesondere für seine Anwendung im Nahrungsmittelbereich ist die Reinheit des Guarkernmehls von grosser Wichtigkeit. Wünschenswert ist ebenfalls eine bessere Ausnutzung der Hauptbestandteile des Endosperms, so dass diese vermehrt anstelle von in Wasser klar lösliche Cellulosederivaten oder anderen Polysaccharide oder in Wasser klar lösliche synthetischen Polymeren in den entspechenden Industriezweigen angewendet werden.
Werden die zu Mehl verarbeiteten, zur Zeit auf dem Markt erhältlichen, aus reinem Guarkernmehl bestehenden Produkte in Wasser bei 25°C oder 86 bis 89°C 10 Minuten gelöst, werden trübe Lösungen erhalten. Wird das unlösliche Material dieser Lösungen mit hohen Zentrifugalkräften (>35.000 x g) ausgeschleudert, stellt sich heraus, dass 23 - 35% des Guarkernmehls aus ausgeschleudertem Material besteht.
Mikroskopische Untersuchungen haben gezeigt, dass sich das ausgeschleuderte Material hauptsächlich aus Schalenfragmenten, Proteinkörpern, unlöslichen peripheren Zellen, intakten, nicht aufgeschlossenen Zellen des inneren Endosperms und anderen Samenbeziehungsweise Splitverunreinigungen zusammensetzt. Eine chemische Derivatisierung des Guarkernmehls (Verätherung, Hydroxypropylierung, Kationisierung, etc.) ermöglicht die Herstellung von Produkten mit signifikant verbessertem Lösungsverhalten in Wasser und damit einhergehend höherer Transparenz der Lösungen.

Eines der bisher angewendeten Verfahren zur Gewinnung von reinem Guarkernmehl verwendet chlorierte Lösungsmittel, wie zum Beispiel Trichlorethylen (siehe EP 0 130 946, Meyhall Chemical AG). Die Lösung wurde durch einfaches Stehenlassen oder Zentrifugieren fraktioniert, wobei sich eine proteinreiche Fraktion (flottierende Fraktion) ausbildete und sich eine proteinarme Fraktion (Sinkfraktion) abschied.

Es konnte gezeigt werden, dass die oberste flottierende Fraktion aus zu Mehl verarbeitetem Endosperm wie Guar CSA 200/50 bis zu 25% Proteine enthalten kann und die Sinkfraktion, die 75% des reinen Mehls ausmacht, etwa 1,5 bis 1,6% Protein enthält. Die Sinkfraktion ist zum Beispiel zur Herstellung von kationischen Derivaten geeignet, die nach ihrer Lösung klare wässrige Lösungen ergeben. Nachteil dieses Verfahrens ist, dass feingemahlene Schalenfragmente ebenfalls in der Sinkfraktion vorgefunden werden.
Ein weiterer Nachteil ist die Verwendung von halogenierten Lösungsmitteln, da ein spezifisches Gewicht von 1,47 bis 1,48 kg/l erforderlich ist. Proteine besitzen eine Dichte von 1,3 kg/l und die Galactomannane eine Dichte von 1,5 bis 1,55 kg/l, je nach Feuchtigkeitsgehalt. Das mit dem hier beschriebenen Verfahren hergestellte Guarkernmehl ist hauptsächlich für technische Anwendungen geeignet, im Nahrungsmittelbereich ist dieses Guarkernmehl wahrscheinlich nicht anwendbar, da Reste des verwendeten halogenierten Lösungsmittels, 10 ppb werden in mit Äthanol extrahierten Fraktionen nachgewiesen, in dem Endprodukt verbleiben. Halogenierte Lösungsmittel sind in unterschiedlichem Mass toxisch und ätzend und besitzen häufig allergisierende Eigenschaften. Auch aus Umweltgründen sollte von diesem Verfahren abgesehen werden.

Ein weiteres Verfahren zur Herstellung von reinem Guarkernmehl wurde bereits 1969 vorgeschlagen. Es bestand aus einer Alkalibehandlung von vorgequollenen Splits bei erhöhten Temperaturen, wobei 100 Teile Alkali von 100 Teilen SPS absorbiert wurden. Die grosse Menge Alkali, d.h. NaOH, musste ausgewaschen werden. Dies wurde mit kaltem Wasser in einem Verhältnis von 1:80 (SPS:H₂O) und in einem Entwässerungsschritt mit Isopropanol (IPA) durchgeführt, in dem gleichzeitig die restliche NaOH der gereinigten Splits durch Essigsäure neutralisiert wurde.

Nach dem Mahlen wurde ein reines Guarkernmehl von hoher Qualität in einer Ausbeute von 60-70%, auf dem Rohmaterial SPS (einfach gereinigte Splits) basierend, gewonnen. 1969 wurde dieses Verfahren von Stein, Hall & Co, Long Island City, New York, verbessert. Das derzeitige Waschverfahren mit Wasser beruht auf diesem Verfahren. Der Zweck dieses Reinigungsverfahrens von Guar-Derivaten ist es, Schalenfragmente und periphere Zellschichten zu entfernen, sowie Nebenprodukte der verschiedenen
Verätherungsreaktionen (Hydroxypropylierung, Carboxymethylierung und Kationisierung und/oder ihre Kombinationen) zu entfernen.

Trotz der oben beschriebenen extensiven Reinigungsverfahren ist es bislang nicht auf ökonomische Weise gelungen, reines, nichtderivatisiertes Guarkernmehl zu erhalten, das eine klare, wässrige Lösung mit hoher Viskösität bei gleichzeitig guten Ausbeuten ergibt.

Die Nachteile der bisherigen Verfahrensweisen zur Reinigung und Gewinnung von reinem Guarkernmehl sind:
1. grosse Verluste wertvoller Endospermteile bei der mechanischen Reinigung und dadurch geringe Ausbeuten an reinem Guarkernmehl in Bezug auf das Ausgangsmaterial;
2. Schalenfragmente, die sich noch immer an den verschiedenen Splitqualitäten befinden und in einem grossen Ausmass die Funktionalität der modifizierten Endprodukte stören;
3. periphere, proteinreiche Zellen der Aleuronschicht, die in Wasser kaum quellen und ebenfalls die Funktionalität des Endprodukts negativ beeinflussen;
4. Vorhandensein anderer Verunreinigungen der Guar-Samen, wie Holzpartikel, die nicht vorhanden sein dürfen.

Es war daher dringend erwünscht ein Verfahren zur Herstellung von reinem Guarkernmehl zu entwickeln, das die oben genannten Nachteile beseitigt und reines Guarkernmehl in guten Ausbeuten liefert, das nach seiner Dispersion in Wasser eine klare, hochvisköse Lösung ergibt, die vor allem zum Beispiel in der Nahrungsmittelindustrie, pharmazeutische, Farben- und Streichmittelindustrie, sowie bei der Ölgewinnung Anwendung findet.

Ziel der vorliegenden Erfindung ist es, die obengenannten Anforderungen zu erfüllen, d.h. durch ein neues Herstellungsverfahren gute Ausbeuten an reinem, insbesondere für die Nahrungsmittelindustrie geeignetem Guarkernmehl zu erhalten, das hochvisköse, klare wässrige Lösungen ergibt.

Das erfindungsgemässe Verfahren zur Herstellung von reinem Guarkernmehl ist in Patentanspruch 1 definiert und umfasst die folgenden Stufen:
(a) Behandeln von Guar -Splits mit Säure;
(b) ein- oder mehrmaliges Waschen der säurebehandelten Splits mit Wasser und/oder Neutralisation mit einer wässrigen alkalischen Lösung;
(c) Behandeln der Splits mit einer wässrigen alkalischen Lösung;
(d) Waschen der Splits mit Wasser;
(e) Entwässern der Splits mit einer wässrigen Alkohollösung.

Eine erste Voraussetzung zur Gewinnung reinen Guarkernmehls ist die Verbesserung des Ausgangsmaterials, der sogenannten Splits. Die mit Schale bedeckten Splits sollten bis zu 42,5 Gewichtsprozent der Saat ausmachen. Die überlappenden Schalen-Endosperm-Teile, die 13,5 Gewichtsprozent der Saat betragen, sind im wesentlichen in Wasser unlöslich. Der Keimling der Saat umfasst die restlichen 44%. Diese Mengenaben zeigen, dass die theoretische Ausbeute an für die Erfindung nutzbaren Splits ohne Schale und ohne überlappende Teile 32% beträgt.
Das erfindungsgemässe reine Guarkernmehl wird am vorteilhaftesten aus Splits hergestellt, die einen Proteingehalt von 4,2% und einen A.I.R.-Anteil von 1,8% haben.

Reines Guarkernmehl, dessen Ausgangsmaterial gemäss der Erfindung vorzugsweise aus Splits mit der grössten, zur Zeit zur Verfügung stehenden Reinheit besteht, kann nach einer Säurebehandlung unter Verwendung von 70 bis 96%-iger, vorzugsweise 96% Schwefelsäure (8 bis 12% auf dem Split-Gewicht basierend) bei Raumtemperatur oder erhöhten Temperaturen hergestellt werden. Wird die Konzentration der Schwefelsäure niedriger als 70 Gewichtsprozent gewählt, werden kleinere Ausbeuten an reinen Guar-Produkten erhalten, die zudem auch geringere Viskositäten aufweisen.
Die Abfolge der verschiedenen Behandlungsstufen nach der Säurebehandlung kann variiert werden, wodurch das resultierende Guarkernmehl unterschiedliche Eigenschaften in Bezug auf sein Viskositätsverhalten, Lichtdurchlässigkeit, Protein- und A.I.R.-Gehalt erhält. Die Abfolge der Behandlungsstufen kann zum Beispiel aus den folgenden technischen Sequenzen, nur um einige Möglichkeiten zu nennen, gewählt werden:
1. Waschen - alkalische Behandlung - Waschen - Entwässern und gegebenenfalls Neutralisation, vorzugsweise mit einer organi schen Säure - Trocknen und/oder Mahlen
2. Neutralisation der säurebehandelten Splits - Waschen-alkalische Behandlung - Waschen - Entwässern und gegebenen falls Neutralisation, vorzugsweise mit einer organischen Säu re - Trocknen und/oder Mahlen

Ein Entwässern mit Isopropylalkohol oder einem anderen Alkohol wie Methanol, Ethanol, N-Propylalkohol, N-Butylalkohol und ähnlichen ist ein absolutes "Muss", wenn gute Produkte hergestellt werden sollen. Eine Behandlung mit IPA verbessert die Klarheit der wässrigen Guarkernmehl-Lösungen. Gegebenenfalls kann gleichzeitig mit der IPA-Behandlung eine Neutralisation mit 99%-iger Essigsäure oder einer anderen sogenannten Lebensmittelsäure wie Citronensäure, Weinsäure, Ameisensäure oder ähnlichen durchgeführt werden.

Der Grad der Befeuchtung während des Mahlens beeinflusst die Eigenschaften des mehligen Endprodukts signifikant. Je höher der Feuchtigkeitsgehalt in einem technisch ausführbaren Mass ist, desto grösser ist die Menge der löslichen Polysaccharide, d.h. umso höher ist die Ausbeute an aktiven Galactomannanen. Dies kann durch die Vergrösserung des Zellvolumens aufgrund des hohen Masses der Befeuchtung erklärt werden. Während des Mahlens werden die gequollenen Zellen durch eine definierte Öffnung oder Spalt gezwungen, wobei die Zellmembran reissen kann, vorausgesetzt, dass die gequollenen Partikel signifikant grösser sind als die Öffnungen (die Elastizität der Zellen spielt ebenfalls eine wichtige Rolle). Bei der Herstellung von Lösungen in Wasser werden die Galaktomannane aus den auf solche Weise zerstörten Zellen freigesetzt, was bei nicht zerstörten Zellen nicht der Fall ist. In diesen Fällen verbleiben die Galactomannane innerhalb der intakten Zellen und tragen nicht wirksam zu der Viskosität der Lösung bei.

Ein Feuchtigkeitsgehalt von ungefähr 72% bis 75% ist beim Mahlen aus praktischen und technischen Gründen annehmbar. Feuchtigkeitsgehalte niedriger als 72% beim Mahlen beeinträchtigen die Qualität des Guarkernmehls. Ein höherer Gehalt bietet keine Vorteile.

Ein Vorteil der vorliegenden Erfindung besteht in der Möglichkeit Produkte für Lösungen mit zum Beispiel so niedrigen Viskositäten wie 45 mPA.s und solche mit bis zu 9000 bis 10.000 mPA.s bei 1%-iger Konzentration in Wasser bei 25°C herzustellen.

Ein weiterer Vorteil der Erfindung besteht darin, reine GuarProdukte herzustellen, deren Proteingehalt so gering wie 0,2 bis 0,5 ist.

Die Ausbeute an reinem Guarkernmehl variiert zwischen 70 und 80%.

Die Zugabe von Borax während der alkalischen Behandlung oder während eines Waschschritts unter alkalischen Bedingungen erleichtert den Reinigungsvorgang wesentlich. Übermässige Befeuchtung oder Quellen kann durch 0,05% Borax, auf dem Gewicht der Ausgangs-Splits basierend, verhindert werden. Das Endprodukt ist nach Zugabe von Borax jedoch für die Verwendung im Nahrungsmittelbereich ungeeignet, da Spuren von Borax (ungefähr 20 ppm) im Endprodukt verbleiben.

Eine Derivatisierung der Galaktomannane des Guarkenrmehls ist für dessen Kaltwasserlöslichkeit von Bedeutung. Durch die Derivatisierung (z.B. Carboxymethylierung, Hydroxypropylierung u. ä.) werden eine oder mehrere nicht-ionische, anionische oder kationische Gruppen hinzugefügt, wodurch die heisswasserlöslichen Galaktomannane kaltwasserlöslich werden. Die Derivatisierung findet üblicherweise im Anschluss an die Reinigung statt. Wie bei der zuvorgenannte Zugabe von Borax ist die Verwendung des derivatisierten Guarkernmehls in der Lebensmittelindustrie nicht erlaubt. Derivatisiertes Guarkernmehl, insbesondere durch kationenaktiviertes, findet jedoch zum Beispiel in kosmetischen Produkten, wie Haarconditioner, Körperlotionen und ähnlichem Verwendung.

Das aus der vorliegenden Erfindung resultierende Material ist besonders vorteilhaft, da es in Wasser gelöst, Lösungen von hoher Klarheit ergibt. Eine 1%-ige Lösung (0,9% Trockensubstanz) des mit diesem neuen Verfahren hergestellten reinen Guarkernmehls zeigt eine Viskosität von 9000 bis 10.000 mPa.s bei 25°C, wenn solche Lösungen in einem Haushaltsmixer unter Verwendung von 90 bis 100°C heissem Wasser hergestellt werden. Die sehr hochviskösen Produkte weisen einen Protein- wie auch einen A.I.R.-Gehalt von nur 0,2 bis 0,6% auf. Durch die Wahl der notwendigen Verfahrensschritte (Säurebehandlung, Waschen mit Wasser, Behandlung mit IPA) kann eine Transparenz der wässrigen Lösung von bis zu 94% erzielt werden. Eine 0,5%-ige Lösung des reinen Guarkernmehls mit extrem hoher Viskosität zeigt bereits bei einer Wellenlänge von 500 nm, 1 cm-Küvette bei 25°C eine Klarheit von 74 bis 81%, wohingegen unbehandelte Split-Lösungen, die unter bei gleicher Konzentration und Temperatur hergestellt wurden, eine Lichtdurchlässigkeit von 46 bis 48% zeigen. Die vergleichbare Klarheit von Lösungen der zuvor erwähnten Sinkfraktionen, erhalten duch Fraktionierung gemahlener Guarprodukte in halogeniertem bzw. fluoriertem Kohlenwasserstoff beträgt etwa 56%. Die Viskosität wurde in einem Brookfield RVT-Viskosimeter, die Transparenz der Lösungen in einem Photospektrometer bestimmt.

Die Erfindung wird im folgenden an Hand von einigen Beispielen erläutert. Als Ausgangsmaterial für die beschriebenen Beispiele wurden Splits der höchsten Qualität verwendet. Angaben wie die Menge des zur Neutralisation verwendeten NaOH, Waschverhältnisse, Proteingehalt und Viskosität sind den entsprechenden Tabellen zu entnehmen.

### Beispiel I

### Behandlung der Splits mit konzentrierter Schwefelsäure bei Raumtemperatur, gefolgt von einem Neutralisations/Waschschritt

Zu Beginn der Reinigung wurde deutlich, dass die verwendete konzentrierte Schwefelsäure nicht in die Schalenfragmente eindrang, die noch mit den Endospermhälften verbunden waren. Dies verhinderte, dass die darunter liegenden peripheren Schichten wie erwünscht behandelt wurden.
Im Verlauf dieser ersten Versuchsreihe (Versuch 1 bis 12, Tabelle I) konnte der Proteingehalt von 4% auf 1,4% reduziert werden. Dies zeigt, dass die meisten der säurebehandelten Schichten während des Alkaliwaschschrittes zur Neutralisation der Säure entfernt wurden.

Die Splits wurden in ein Becherglas gewogen und die erforderliche Menge an Schwefelsäure wurde schnell zugegeben. Mit einem Plastikspatel wurde gründlich gemischt.

Während der Säurebehandlung wurden die Splits wiederholt gemischt. Dann wurde alkalisches Waschwasser zugegeben und die Aufschlämmung 5 bis 10 Minuten gerührt. Die auf diese Weise behandelten Splits wurden durch Filtration zurückgewonnen und, falls notwendig, nochmals gewaschen. Das Gewicht der Filtrate wurde festgehalten. Die gereinigten Splits wurden bis zu einem Feuchtigkeitsgehalt von 70% vor dem Mahlen durch Zugabe der fehlenden Menge Wasser hydratisiert.

Die gequollenen Splits wurden unter Verwendung einer Retsch Tischmühle gemahlen.

### Beispiel II

### Behandlung der Splits durch konzentrierte Schwefelsäure bei 96 bis 103°C während 15 bis 30 Minuten und deren Reinigung mit alkalischem Waschwasser und zusätzlichem Waschen mit Was ser

Die Splits wurden mit der erforderlichen Menge an Schwefelsäure (10 bis 15%) gemischt, nachdem sie mit einer 0,5%-igen NaOH-Lösung leicht alkalisch gemacht worden waren (Tabelle I, Versuche 13 bis 17). Dies erlaubt die Kontrolle der Säureverteilung. Alkalische Splits sind gelb und werden nach der Säurebehandlung bernsteinfarbig.

Die sauren Splits wurden auf eine Glasplatte plaziert und in einen Heissluftofen mit der erforderlichen Temperatur (96 bis 103°C) gebracht.

Nach dieser Behandlung wurden die Splits gewaschen, dabei gleichzeitig neutralisiert und nochmals gewaschen. Das gesamte Waschverhältnis betrug maximal 1:10. Die weitere Behandlung erfolgte wie in Beispiel 1 beschrieben.

Der Proteingehalt des gereinigten Guarkernmehls konnte auf 1,2% gesenkt werden. Die Viskositätsdaten sind Tabelle IV zu entnehmen.

### Beispiel II A

Die Splits wurden wie in Beispiel II beschrieben behandelt. Zusätzlich zu dem Waschschritt mit Wasser wurden die geqollenen, noch alkalischen Splits im Versuch 18 (Tabelle I) mit heissem Isopropanol (IPA) in einem Verhältnis von Splits:IPA von 1:2 dehydratisiert und mit Essigsäure neutralisiert, wodurch der Proteingehalt unter 1% sank, was auf die zusätzliche Alkalibehandlung der Proteine und ihre teilweise Extraktion zurückzuführen ist.

In den Versuchen 19 und 20 (Tabelle I) wurde die Schwefelsäuremenge auf 8% reduziert; ein Dehydrationsschritt mit IPA im Verhältnis Splits:IPA von 1:1,8 war eingeschlossen. Der Proteingehalt des gereinigten Guarkernmehls lag etwas über 1% (siehe Tabelle I).

### Beispiel III

### Behandlung von Splits mit 8% Schwefelsäure und alkalische Behandlung unter Verwendung verschiedener Mengen NaOH bei erhöhten Temperaturen, Waschen mit Wasser und Dehydratation

Die Bedingungen und die Ergebnisse der im folgenden beschriebenen Versuche sind in Tabelle II festgehalten.

Die Splits wurden in ein Becherglas gewogen und die erforderliche Menge an Schwefelsäure wurde zugegeben, nachdem die Splits mit 5% NaOH leicht alkalisch gemacht wurden.
Die Hydrolyse fand bei 105°C während 20 Minuten statt, wonach Alkali bei 65 bis 70°C für nur 7 Minuten zugegeben und die Mischung gerührt wurde.
Die alkalischen Splits wurden mit Wasser gewaschen und mit IPA in einem Verhältnis von 1:1,6 bei 55 bis 62°C entwässert, dann getrocknet, um das restliche IPA zu entfernen. Der Feuchtigkeitsgehalt wurde auf 70% gebracht und die Splits wurden gemahlen.

Gemäss dem zuvor beschriebenen Verfahren wurden 100 g Splits zunächst mit 4 g 5% NaOH behandelt. Nach 2 bis 5 Minuten wurde die übliche Menge von 8 g einer 96%-igen Schwefelsäure zugegeben und so gut wie möglich gemischt.
Die für die Versuche 23, 24, 25 und 26 verwendeten Säuremengen unterscheiden sich leicht von 8 g:
- Nr.23:: 8,1 g
- Nr.24:: 8,56 g
- Nr.25:: 8,28 g
- Nr.30:: 8,04 g
Die Hydrolyse der peripheren Schichten fand während 20 Minuten bei 102 bis 106°C statt.
Die sauren Splits der Versuche Nr. 24, 25 und 26 wurde in einem Verhältnis von 1:2, 1:1,6 beziehungsweise 1:1,6 (70°C) mit Wasser gewaschen und dann mit NaOH behandelt.
Die anderen Versuche wurden einmal mit 30%-iger NaOH bei erhöhten Temperaturen behandelt, dann mit Wasser gewaschen und mit IPA dehydratisiert. Der Alkohol wurde mit heisser Luft so gründlich wie möglich entfernt. Die Splits wurden bis zu 70% befeuchtet und in einer Retsch-Mühle gemahlen (siehe Tabelle II).

In den Versuchen 27 bis 32 (Tabelle II) hatte das Waschwasser nach der Alkalibehandlung eine Temperatur von 70°C. Dieser Anstieg der Wassertemperatur beeinflusste die endgültige Viskosität kaum (in einem Bereich von 4400 bis 5750 mPa.s), wohingegen ein Waschen bei erhöhten Temperaturen nach der Säurebehandlung eine signifikante Reduzierung der Viskosität verursachte (Versuch Nr. 26: 1550 mPa.'s).

Der Proteingehalt der gereinigten Produkte variierte bei den Versuchen Nr. 21 bis 32 zwischen 0,67 und 1,11% (auf 10% Feuchtigkeit basierend).
Bei Versuchen Nr. 24, 25 und 26 wurden die säurebehandelten Splits zuerst mit Wasser gewaschen und dann, wie oben beschrieben, mit Alkali behandelt. Der Proteingehalt sank auf 0,7%, allerdings besteht die Gefahr, dass die Galactomannane abgebaut werden (siehe Versuch 26, Tabelle II).

### Beispiel IV

### Behandlung der SPLITS mit 6-11% 96%-iger Schwefelsäure bei 105°C gefolgt von einem Neutralisations-/Waschschritt und Alkali-behandlung, Waschen, Dehydrierung und Neutralisation durch Essigsäure.

In Tabelle III sind die Bedingungen der im folgenden beschriebenen Versuche zusammengefasst.

Die säurebehandelten, neutralisierten Splits wurden mit einem grossen Überschuss 30%-igem NaOH oder 23%-igem NaOH bei erhöhten Temperaturen von 45 - 50°C in den Versuchen Nr. 34 und 65 und 65 - 70°C in den restlichen Versuchen entproteinisiert.
Die alkalibehandelten Splits wurden zweimal mit Wasser gewaschen, entwässert und gleichzeitig neutralisiert mit 99% Essigsäure in IPA. Das Verhältnis Splits:IPA betrug 1:1,6.
Das meiste des noch enthaltenen IPA wurde durch Behandlung mit heisser Luft (70°C) entfernt, wonach die Splits mit Wasser bis 70% befeuchtet wurden. Die Splits wurden anschliessend in einer Retsch-Mühle gemahlen.

Die in Wasser gelösten Produkte zeigten Viskositäten bei gleichzeitig ausserordentlicher Klarheit und sehr niedrigem Proteingehalt. Die Ergebnisse sind in Tabelle VI dargestellt. Die Produkte von Versuch Nr. 36 hatten zum Beispiel einen so niedrigen Proteingehalt wie 0,45%, enthielten jedoch 1-2% Natriumacetat.

### Beispiel V

### Entfernung der peripheren Schichten der Splits mit 8% 96%-iger Schwefelsäure, gefolgt von einer Neutralisation oder Wa schen/Hydration, einer Alkalibehandlung und Waschen/Entwässern/Neutralisation

In Versuchen, 71-85 wurden 100 g Splits wie gewöhnlich alkalisch gemacht. Die Splits der anderen Versuche wurden zuerst mit der erforderlichen Menge Schwefelsäure behandelt.

In weiteren, hier nicht aufgefuhrten Versuchen wurden die neutralsisierten Splits mit stöchiometrischen Mengen NaOH unter Verwendung von NaOH-Lösungen mit Konzentrationen von 30 beziehungsweise 23% behandelt. Dann wurde zweimal mit Wasser, jeweils in einem Verhältnis von 1:2 gewaschen. Die folgende alkalische Behandlung wurde bei 65-70°C während 5 Minuten durchgeführt, wonach die Splits zweimal mit Wasser in einem Verhältnis von 1:3,2 und 1:8,4 gewaschen, danach in IPA entwässert und mit 99% Essigsäure neutralisiert wurden. Das IPA wurde durch Behandlung mit heisser Luft entfernt und die Splits wie in den vorangegangenen Beispielen beschrieben, gemahlen. Der Proteingehalt betrug 0,55% beziehungsweise 0,65%.
In weiteren, nicht aufgefuhrten Versuchen wurde der erste Waschgang mit Wasser nur einmal in einem Verhältnis von 1:2 durchgeführt. Es konnte gezeigt werden, dass die Alkalibehandlung bei 65-70°C eine Extraktion von mehr Protein erlaubt, als diejenige, die bei 50-55°C durchgeführt wurde.

Wenn H₃PO₄ anstelle von H₂SO₄ verwendet wurde, wurde weniger Protein entfernt und niedrigere Viskositäten erhalten.

### Beispiel VI

### Entfernung der peripheren Split-Schichten gemäss Beispiel V, unter Auslassung des Waschschritts nach der Säurebehandlung.

Die sauren Splits wurden nach der Hydrolyse der peripheren Schichten mit alkalischen Lösungen unterschiedlicher Konzentration neutralisiert. Dann wurde eine Alkalibehandlung bei 65-70°C für 7 Minuten ausgeführt und die Produkte wurden mit Wasser gewaschen und entwässert/neutralisiert und wie gewöhnlich aufgearbeitet. Die Wirkung der Alkalikonzentration bei der Neutralisation beeinflusst die endgültige Viskosität, wie unten gezeigt, beträchtlich. Die Lichtdurchlässigkeit wird verbessert, je niedriger NaOH-Konzentration ist (siehe Tabelle IV).

In Versuch Nr. 57 wurden die neutralisierten Splits nach der Säurebehandlung mit einer kleinen Menge Wasser behandelt, bevor die Behandlung mit Natronlauge durchgeführt wurde.

Die früheren Versuche haben gezeigt, dass eine Befeuchtung der neutralisierten, säurebehandelten Splits einen Einfluss auf die Viskosität ausübt. Daher wurden die im folgenden beschriebenen Versuche ohne diese Befeuchtung durchgeführt. Gleichzeitig wurde die NaOH-Konzentration während der alkalischen Behandlung variiert.
In den Versuchen 68 bis 73 (Tabelle V) wurde 19% NaOH verwendet, in den Versuchen 74 bis 76 24% und in den Versuchen 77 bis 79 24,4%. In den Versuchen 68 bis 73 dauerte die alkalische Behandlung 8 Minuten, in den Versuchen 74 bis 79 10 Minuten.

Versuch Nr. 73 wurde mit einen höheren Split:H₂O-Verhältnis gewaschen. Ein zusätzlicher Waschschritt wurde in einem Verhältnis von 1:4 durchgeführt. Diese zusätzliche Reinigung lieferte ein Produkt mit einer höheren Viskosität.

In den Versuchen 71 bis 79 (Tabelle V) wurden die Ausgangs-Splits alkalisch gemacht, was einen positiven Effekt auf die endgültigen Viskositäten zeigte.

Versuche Nr. 78 und 79 zeigen, dass eine alkalische Entwässerung mit IPA, gefolgt von einer Neutralisation in zwei Schritten, die endgültige Viskosität zerstört.

In den Versuchen 80 und 81 bis 85 (Tabelle VI) konnte ebenfalls gezeigt werden, dass die Alkalikonzentration oder ein Waschschritt während oder nach der Neutralisation der sauren Splits eine Abnahme der Viskosität verursacht.

### Beispiel VI A

### Versuchsanordnung siehe Beispiel VI, mit dem Unterschied, dass der ersten Neutralisation ein Befeuchtungsschritt folgt

### Versuche Nr. 60 bis 67 (Tabelle V)

Versuch Nr. 60 lieferte eine niedrigere Viskosität, jedoch höhere Transparenz.

Die in Tabelle VII dargestellten Versuche 61 bis 63 zeigen deutlich den positiven Einfluss der zur Proteinentfernung aus den Splits eingesetzten Menge Alkali.

Versuche Nr. 64 bis 67 zeigen, dass eine längere Neutralisationszeit nach der Säurehydrolyse der peripheren Schichten die Herstellung von Guar-Produkten mit höherer Viskosität erlaubt (2790-3075 mPa.s gegenüber 2300 mPa.s).

Die gereinigten Splits (auf 10% Feuchtigkeit basierend) wurden in entmineralisiertem, 90 bis 100°C warmen Wasser in einer 1%-igen Konzentration unter Verwendung eines Haushaltsmixers gelöst.

### Beispiel VII

### Reinigung der Splits mit konzentrierter Säure, Alkalibehandlung, Waschen und Entwässerung/Neutralisation

### Versuche Nr. 133 bis 141

100 g Splits wurden mit 4g 5%-iger NaOH 10 Minuten bei Raumtemperatur inkubiert. 12 g 96%-iger H₂SO₄ wurde zugegeben und 7 Minuten bei Raumtemperatur gerührt. Die Reaktion fand dann 67 Minuten bei Raumtemperatur statt. Den Versuchen Nr. 134 bis 141 wurden 88 g einer 23%-igen NaOH zugegeben, dem Versuch Nr. 133 88 g einer 18%-igen NaOH. Die Mischung wurde 3 Minuten bei 74°C gerührt und die Reaktion fand während 14 Minuten bei 85 bis 62°C statt.
Versuch Nr. 133 wurde 3 Minuten bei 57°C gerührt und 7 Minuten bei 74 bis 64°C reagieren gelassen.

Es wurde zweimal in einem Verhältnis von jeweils 1:8,3 gewaschen. Der erste Waschgang dauerte 15 Minuten, der zweite 10 Minuten.

Die Entwässerung./Neutralisation mit IPA fand in einem Verhältnis von 1:1 statt. Verschiedene Mengen Essigsäure (siehe Gesamtzusammenfassung) wurden verwendet.

Eine Entwässerung mit IPA wurde in einem Verhältnis von 1:0,6 durchgeführt und das restliche IPA anschliessend durch Trocknen der Splits in heisser Luft entfernt.

Die Ergebnisse sind in der Zusammenfassungstabelle dargestellt.

### Beispiel VIII

100 g Splits wurden 10 Minuten mit 4 g 5%-iger NaOH inkubiert. 12 g 96%-ige H₂SO₄ wurde zugegeben, 7 Minuten gerührt und die Mischung bei Raumtemperatur 10 Minuten reagieren gelassen. Die Alkalibehandlung wurde mit 20 g NaOH, auf den 100 g Splits basierend, als 30%-ige Lösung durchgeführt. Die Behandlung fand bei 53°C während 7 Minuten statt. Anschliessend wurde 5 Minuten mit Leitungswasser in einem Verhältnis von 1:4 gewaschen und die Splits wurden durch Screening wiedergewonnen. Es wurde zweimal unter Rühren während 7 Minuten mit Leitungswasser gewaschen, die Splits durch Screening wiedergewonnen. Es folgte eine Entwässerung/Neutralisation mit IPA in einem Verhältnis von 1:1, anschliessende Wiedergewinnung der Splits durch Screening. Es folgte eine weitere Entwässerung der Splits mit IPA in einem Verhältnis von 1:0,6. Das restliche IPA wurde mit heisser Luft entfernt.

Wurde Äthanol anstelle von IPA verwendet, wurden hohe Natriumacetatgehalte festgestellt.

Es wurde mit KOH als alkalische Lösung behandelt, um die Löslichkeit von Kaliumacetat in IPA zu untersuchen. Es konnte kein signifikanter Unterschied zu Natriumacetat festgestellt werden.

In weiteren, hier nicht aufgefuhrten Versuchen wurden weitere Variationen dieses Verfahrens untersucht. Die leicht alkalischen Splits wurden 30 Minuten bei 100 °C inkubiert und in einem weiteren Versuch bei 80°C, ebenfalls während 30 Minuten. Eine Behandlung mit 12,4 g 96%-iger H₂SO₄ schloss sich an.

### Beispiel lX

### Überneutralisation der säurebehandelten Splits durch 10% NaOH, die dann mit heisser 30%-iger NaOH während 25 bis 29 Minuten bei 65 bis 69°C behandelt, dann entwässert und neutralisiert wurden.

Produkte mit Proteingehalten von ungefähr 0,5%, hohen Viskositäten und grosser Transparenz können mit diesem Verfahren hergestellt werden.

### Beispiel X

### Behandlung der Splits mit konzentrierter Schwefelsäure bei Raumtemperatur, Neutralisation mit 10%-iger Natronlauge, Alkalibehandlung der Splits mit 23%-iger Natronlauge, Waschen der Splits, Zugabe von 1,600 kg IPA, Mahlen der Splits, Neu tralisation mit H₃PO₄, Mahlen, Entwässern mit 1,000 kg IPA, Trocknen.

Zu 1,000 kg Splits höchster Qualität wurde 0,120 kg H₂SO₄ während 7 Minuten bei Raumtemperatur zugegeben, gemischt und 60 Minuten bei Raumtemperatur stehengelassen. 1,000 kg 10%-ige NaOH wurden zur Neutralisation der Schwefelsäure zugegeben, wobei eine Temperatur von >53°C erhalten wurde, die Mischung wurde während 10 Minuten bei einer Temperatur von 53 bis 63°C gemischt. 0,900 kg 23%-ige NaOH wurden unter Erreichen einer Temperatur von 78°C zugegeben, gemischt und 20 Minuten unter zeitweiligem Rühren bei 70 bis 75°C stehengelassen. Anschliessend wurde dreimal für jeweils 7 Minuten mit 7,000 kg Leitungswasser bei Raumtemperatur gewaschen. 1,600 kg IPA wurde zugegeben und die so behandelten Splits 5 Minuten in einer Kolloidmühle gemahlen. Nach der Neutralisation mit 85%-iger H₃PO₄ wurde weitere 10 Minuten gemahlen und der Ansatz über 45 µm-Gaze filtriert. 1,000 IPA wurden zugegeben und 7 Minuten kräftig gerührt. Das daraus resultierende Guarkernmehl wurde getrocknet. Die in einem Brookfield RVT-Viskosimeter bei 25°C gemessene Viskosität einer 1%-igen Lösung betrug 7900 mPa.s, die in einem Photometer gemessene Transparenz einer 0,5%-igen Lösung betrug 89,0%, der Proteingehalt 0,43% und der Gehalt an A.I.R. 0,71%.

### Beispiel XI

### Teilweise depolymerisiertes reines Guarkernmehl

### Behandlung der Splits mit H₂SO₄ bei 105°C, Neutralisation mit 30% Natronlauge, Waschen, Alkalibehandlung mit 30%-iger Natronlauge, Waschen, Entwässerung/Neutralisation.

1,000 kg Splits wurden mit 0,060 kg 96%-iger H₂SO₄ 18 Minuten bei 105°C behandelt. 0,157 kg 30%-iger NaOH wurde zur Neutralisation zugegeben und die Mischung 2 Minuten bei Raumtemperatur inkubiert. Die Splits wurden anschliessend 2 Minuten bei Raumtemperatur mit 2,000 kg Leitungswasser gewaschen. Um die Splits teilweise zu deproteinisieren, wurde 1,060 kg 30%-ige NaOH zugegeben, die Mischung 4 Minuten gerührt und anschliessend weitere 7 Minuten bei 65-70°C reagieren gelassen. Die Splits wurden dann mit 2,4 kg Leitungswasser 6 Minuten bei Raumtemperatur gewaschen, wonach nochmals 10 kg Leitungswasser zugegeben wurden und die Mischung 5 Minuten bei Raumtemperatur inkubiert wurde, um die Splits zu befeuchten. 1,6 kg zu 99% wasserfreies IPA wurde zugegeben, 15 Minuten bei 55-62°C inkubiert und dann mit 0,066 kg 99%-iger Essigsäure behandelt. Die Splits wurden mit einer Hammermühle gemahlen.

Die wie zuvor beschrieben gemessene Viskosität einer 1%-igen Lösung betrug 60 mPA.s, die Lichtdurchlässigkeit 94% und der Proteingehalt 0,65%.

### Beispiel XII

### Teilweise depolymerisierte reine Guarkernmehle mit extrem niedrigem Proteingehalt und ausgezeichneten Klarheiten der wässrigen Lösungen

Die Splits (1 kg) werden 60 Minuten mit 8 Gewichtsprozent 96%-iger H₂SO₄ bei Raumtemperatur behandelt und anschliessend zunächst mit 670 g einer 10%-igen Natronlauge, dann mit 1,060 kg einer 30%-igen Natronlauge behandelt. Die Behandlung der Splits erfolgte 20 Minuten mit 50%-iger Natronlauge bei 67°C. Die Splits wurden zweimal jeweils 2 Minuten mit Leitungswasser im Verhältnis von 1:5 und einmal 6 Minuten mit Leitungswasser im Verhältnis 1:8 gewaschen. Die Splits wurden mit 1,4 kg 99%-igem Isopropanol entwässert und die gereinigten Splits anschliessend in einer Kolloidmühle gemahlen.

Die Suspension wurde zur Sedimentation stehengelassen und nach 15 Minuten 4,0 bis 4,6 l der überstehenden Flüssigkeit dekantiert, worauf nochmals 1,1 kg 99%-iges IPA zugesetzt wurden. Die Suspension wurde unter Rückfluss bis auf 60 bis 65°C erhitzt und diese Temperatur 2 Stunden konstant gehalten.

Eine weitere Zugabe von 1,2 kg 99%-igem IPA erleichtert die Dehydration. Die alkalischen Produkte wurden mit 36 bis 60 g 99%-iger Essigsäure neutralisiert und durch nochmaliges Nassmahlen in einer Kolloidmühle auf die gewünschte Feinheit gebracht. Die Produkte wurden durch Filtration und anschliessender Trocknung des "nassen" Filtrats bei 70°C zurückgewonnen. 10 ml 30%-iges H₂O₂ wurden zur Beschleunigung der Depolymerisation während der alkalischen Behandlung in der Wasser/IPA-Suspension zugegeben.

Die folgenden Resultate wurden erhalten:

| | Produkt | | |
|---|---|---|---|
| | A | B | C |
| Ausbeute in g | 792 | 735 | 725 |
| Wassergehalt % | 9,6 | 11,2 | 6,8 |
| 1% Viskosität mPa 5,20 UpM Messtemperatur 25°C | | | |
| Lösung 1 | 1250 | 850 | 35 |
| Lösung 2 | 1650 | 900 | 35 |
| 0,5% Transmission 1 cm Küvette/500 nm | | | |
| Lösung 1/Wasser 1:1 | 85,1 | 87,0 | 92,0 |
| Lösung 2/ Wasser 1:1 | 96,0 | 95,8 | 97,2 |
| Protein % Nx 6,28 | 0,25 | 0,23 | 0,31 |

Lösung 1 wurde bei 25°C und Lösung 2 bei 90°C im Mixer hergestellt und anschliessend bis auf 25°C abgekühlt.

### Beispiel XIII

10 kg Splits wurden bei 35 bis 40°C mit 1 kg 96-98%-iger H₂SO₄ während 1 Stunde behandelt, wobei der Ansatz intermittierend jeweils 30 Sekunden lang gemischt wurde. Die behandelten Splits wurden dann mit 1,64 kg 50%-iger NaOH neutralisiert, was einen Temperaturanstieg bis auf 50 bis 70°C hervorrief. Nach 15 Minuten wurden die neutralisierten Splits zweimal 2 bis 3 Minuten mit Leitungswasser im Verhältnis Splits:Leitungswasser 1:5 gewaschen und anschliessend nocheinmal 6 Minuten in einem Split:Leitungswasser-verhältnis von 1:8. Das Waschwasser wurde jeweils abgesaugt. Die gereinigten Splits nehmen bei dem Waschvorgang 80 bis 82% Wasser auf. Die stark hydratisierten Splits wurden in einer Hammermühle mit einer Leistung von 30 kg/h unter Ansaugen von etwa 110°C heisser Luft gemahlen, sodass das Produkt im gleichen Arbeitsgang getrocknet werden konnte. Die auf diese Weise hergestellten Produkte weisen in wässriger Lösung mit einer Konzentration von 1% basierend auf einem Wassergehalt von 10% des gemahlenen Produkts Viskositätswerte zwischen 5000 und 8350 mPa.s auf. Die Lösungen wurden wie zuvor beschrieben in einem Haushaltsmixer mit 90°C heissem Wasser hergestellt.
Die Klarheit der 1:1 verdünnten, bei einer Schichtdicke von 1 cm gemessenen wässrigen Lösungen betrug 61 - 67,5%.

Die auf diese Weise hergestellten Produkte können in einem zweiten Prozess mit 8-10% NaOH (auf dem Ausgangsgewicht der Splits basierend) in wässrigem IPA (35 Gewichtsprozent) bei 65 bis 70°C und anschliessendem Waschen mit wässrigem IPA zu fast wasserklaren Produkten, wenn in Wasser gelöst, umgewandelt werden. Das gereinigte alkalische Produkt wurde mit Essigsäure neutralisert und je nach den Bedingungen beim Waschen können diese Produkte bis zu 12% Natriumacetat enthalten.

### Beispiel XIV

Im folgenden werden, in Anlehnung an die vorangegangenen Beispiele, verschiedene Verfahren beschrieben, die reines Guarkernmehl für technische Anwendungen liefern.

A. Mit Wasser gewaschene, säurebehandelte Splits werden einer anschliessenden Alkalibehandlung bei verschiedenen Temperaturen und Reaktionszeiten unterzogen, je nach der Spezifität des Endprodukts. Nach der Alkalibehandlung werden die Splits mit Wasser gewaschen, um die Abbauprodukte der Alkalibehandlung als auch gelöste Proteine und Alkali zu entfernen.
Waschen ohne Borax führt zu Wassergehalten von bis zu 85% der behandelten Splits. Diese stark gequollenen Splits werden mit wässrigem IPA dehydratisiert und nach der teilweisen Dehydrierung neutralisiert (circa 5 Minuten nach Zugabe des wässrigen IPA).

Die teilweise dehydrierten Splits können in einer Kolloidmühle nass gemahlen, durch Filtration zurückgewonnen und weiterverarbeitet werden.

B. Die Splits werden wie in A beschrieben behandelt, jedoch findet die Alkalibehandlung, entweder der Splits oder als grob gemahlenes nasses Produkt, in einer Filter/Wascheinheit während 1 Stunde bei 70°C statt. Diese Behandlung ist gefolgt von einer Extraktion mit wässrigem IPA, Neutralisation und Dehydration ebenfalls durch wässrigen IPA. Der nach dieser Behandlung erhaltene feuchte Kuchen kann getrocknet werden und je nach den Erfordernissen in das entsprechende Endprodukt weiterverarbeitet werden.

C. Die Behandlung der Splits erfolgt wie in B. beschrieben, jedoch liefert die Zugabe von H₂O₂ ein reines Guarkernmehl mit niedrigeren Viskositäten. Dies führt zu einer Verbesserung der Klarheit der Lösung der Endprodukte.

D. Die Behandlung der Splits erfolgt wie in A. beschrieben, jedoch unter Verwendung von Reagenzien wie Natriummonochloracetat oder Glycidyltrimethylammoniumchlorid zur Herstellung von anionischen oder kationischen Produkten grosser Klarheit. Diese Reagenzien werden in ein Reaktionsgefäss gegeben, nachdem das Produkt die Filter/Wascheinheit (siehe B) durchlaufen hat.

Der feuchte Kuchen aus reinem Guargummi wird in einem Rotationstrockner mit 80°C heisser Luft getrocknet. Die getrockneten Produkte werden auf die gewünschte Grösse pulverisiert und dann verpackt.

Weitere Beispiele zur Illustration der Erfindung sind den beigelegten Tabellen ab Seite 11 zu entnehmen.

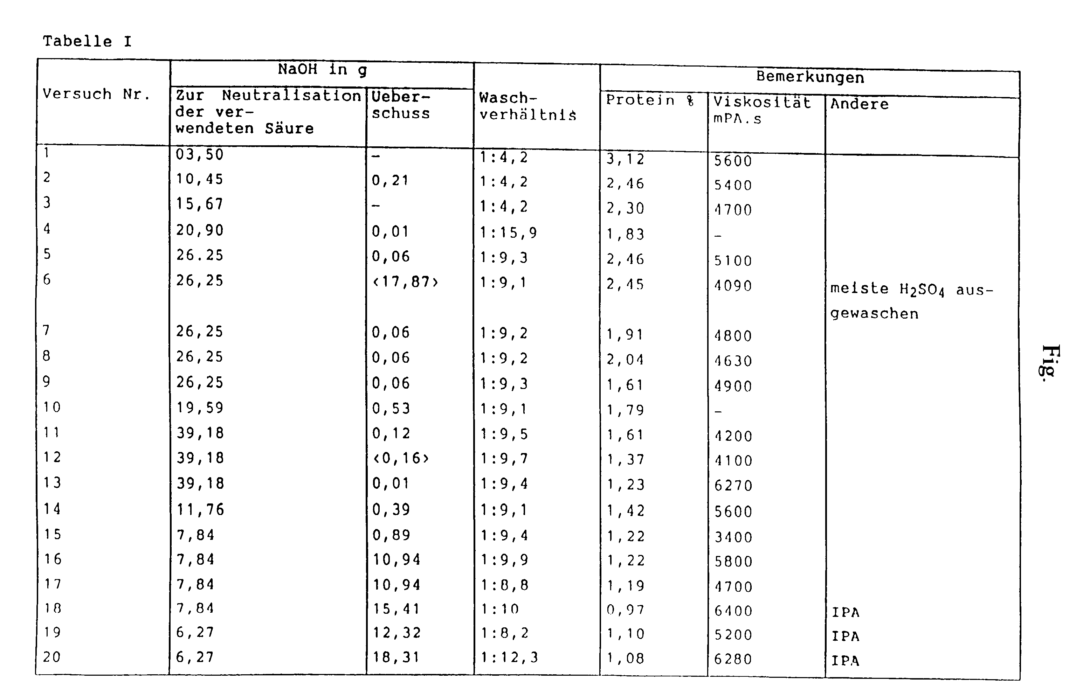

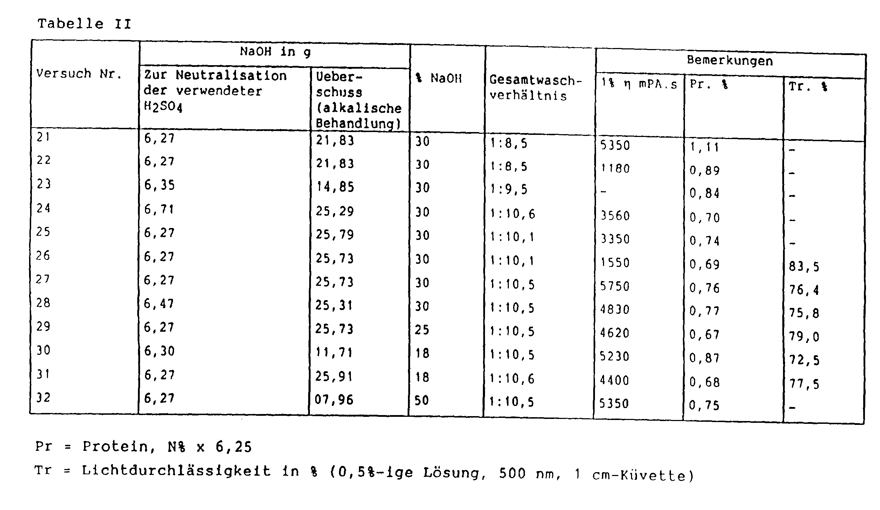

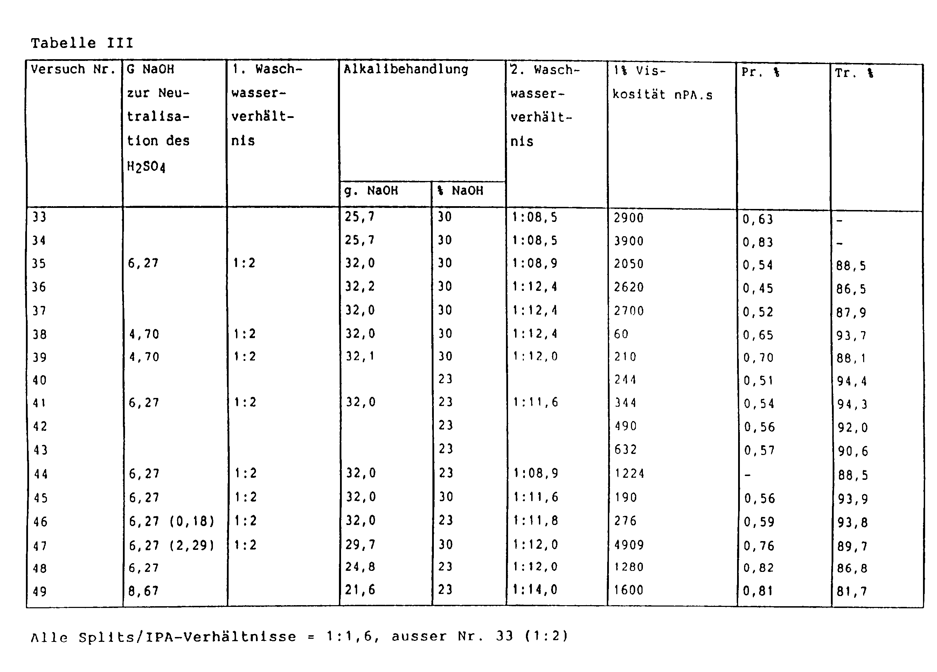

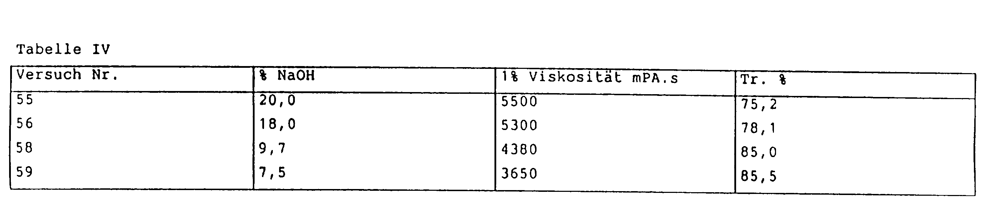

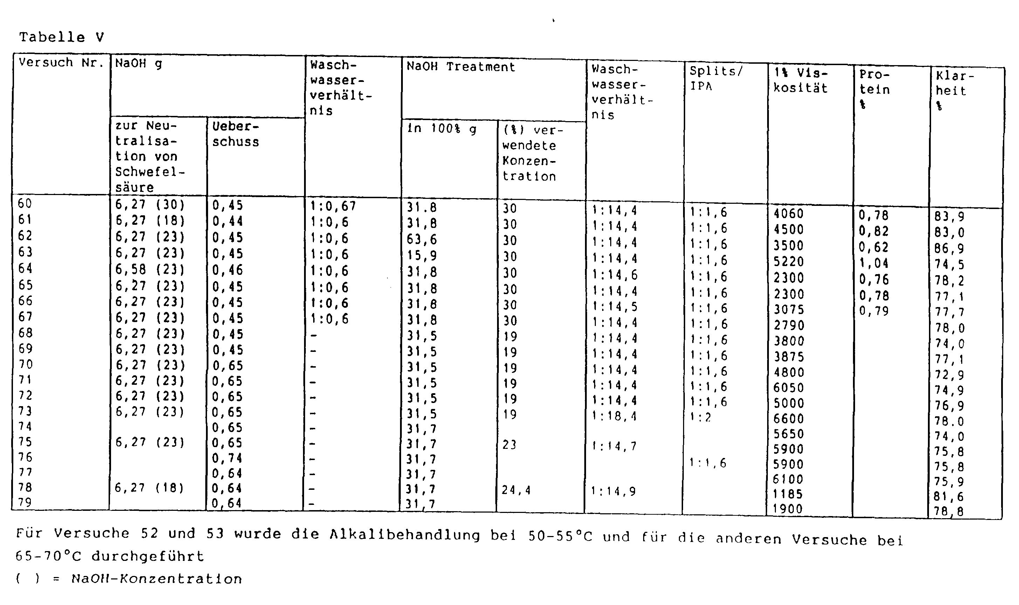

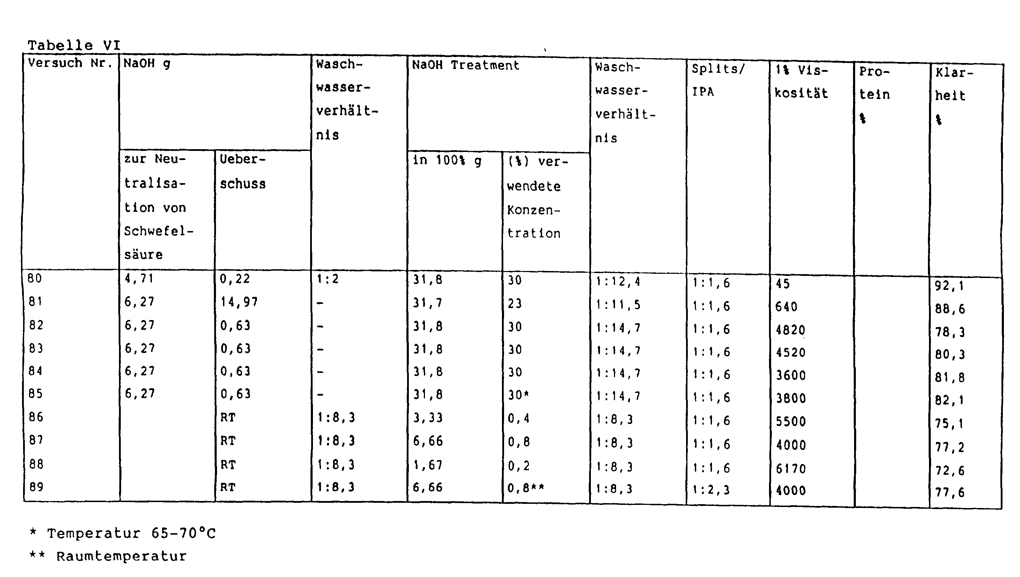

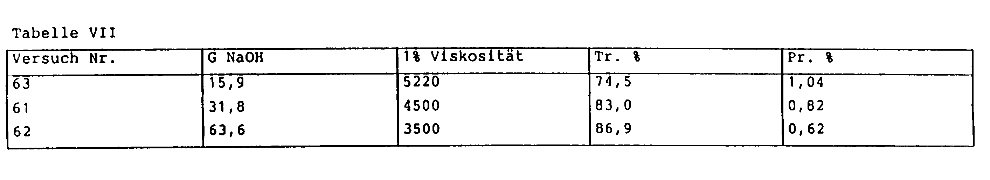

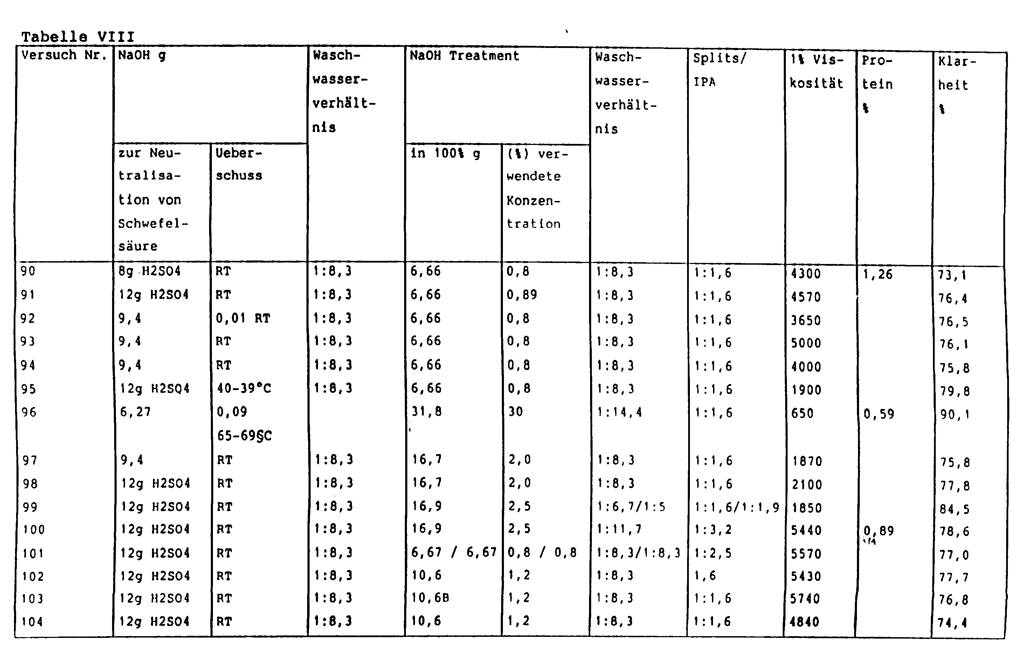

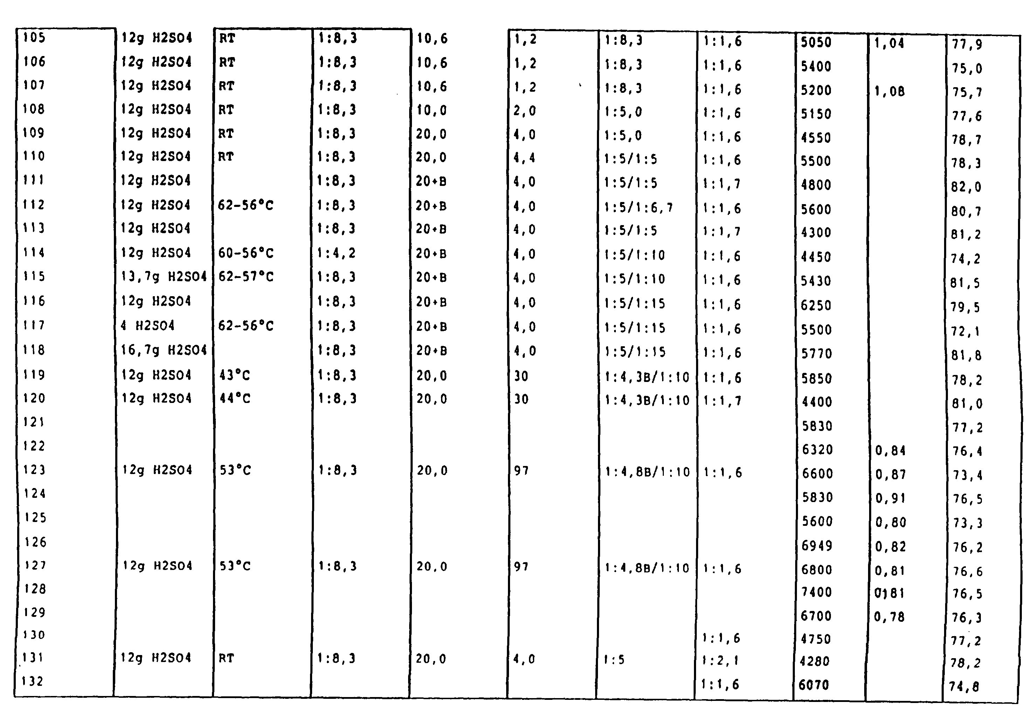

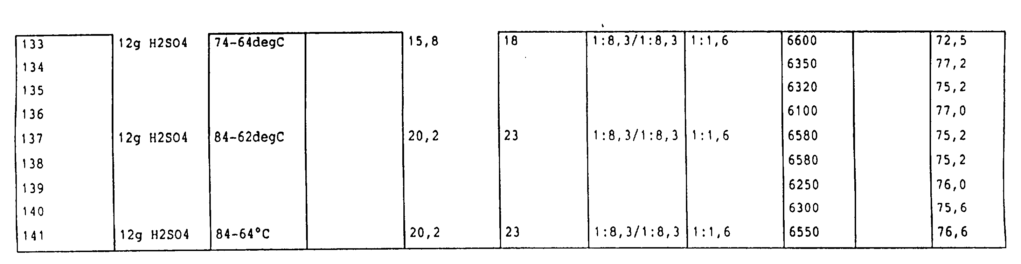

## Patentansprüche

1. Verfahren zur Herstellung von Guarkernmehl, dadurch gekennzeichnet, dass es die folgenden Stufen umfasst:
(a) Behandeln von Guar-Splits mit konzentrierter Schwefelsäure, wobei die eingesetzte Menge Schwefelsäure 5 bis 20 Gewichtsprozent beträgt;
(b) ein- oder mehrmaliges Waschen der säurebehandelten Splits mit Wasser und/oder Neutralisation mit einer wässrigen alkalischen Lösung;
(c) Behandeln der Splits mit einer wässrigen alkalischen Lösung;
(d) Waschen der Splits mit Wasser; und
(e) Entwässern der Splits mit einer wässrigen Alkohollösung.

2. Verfahren gemäss Anspruch 1, dadurch gekennzeichnet, dass die Säure zur Behandlung der Splits in Stufe (a) Schwefelsäure in einer Konzentration von 70% bis 96% ist.

3. Verfahren gemäss Anspruch 1, dadurch gekennzeichnet, dass die Säure zur Behandlung der Splits in Stufe (a) Schwefelsäure in einer Konzentration von weniger als 70% ist.

4. Verfahren gemäss einem der vorstehenden Ansprüche, dadurch gekennzeichnet, dass die wässrige alkalische Lösung in Stufe (b) eine wässrige Natronlauge ist.

5. Verfahren gemäss einem der vorstehenden Ansprüche, dadurch gekennzeichnet, dass die alkalische Lösung in Stufe (c) Natronlauge in einer Konzentration von 20-40 Gewichtsprozent oder 23-30 Gewichtsprozent ist.

6. Verfahren gemäss einem der vorstehenden Ansprüche, dadurch gekennzeichnet, dass die wässrige Alkohollösung von Stufe (d) eine wässrige Lösung von Methanol, Ethanol oder Isopropylalkohol ist.

7. Verfahren gemäss einem der vorstehenden Ansprüche, dadurch gekennzeichnet, dass die erhaltenen Splits in einer Stufe (f) einer Neutralisation unterzogen werden, in welcher sie mit einer Lösung aus einer organischen Säure wie Citronensäure, Weinsäure, Ameisensäure oder Essigsäure behandelt werden.

8. Verfahren gemäss einem der vorstehenden Ansprüche, dadurch gekennzeichnet, dass die Splits im Anschluss an die Stufe (e) getrocknet werden und anschliessend zu 60-80% oder 70% bezogen auf das Trockengewicht befeuchtet werden.

9. Verfahren gemäss einem der vorstehenden Ansprüche, dadurch gekennzeichnet, dass die in Stufe (a) verwendeten Splits einen Proteingehalt von 4,2 Gewichtsprozent und einem Gehalt durch Säure nicht hydrolisierbarer Stoffe von 1,8 Gewichtsprozent haben.

10. Guarkernmehl, das als 1%-ige wässrige Lösung eine Viskosität von 45 bis 10'000 mPa.s aufweist, das einen Gehalt an Proteinen und durch Säure nicht hydrolisierbarer Stoffe von zusammen 0,8 bis 0,9% besitzt und das als 0,5%-ige wässrige Lösung eine bei einer Wellenlänge von 500 nm gemessene Transparenz von mindestens 70% zeigt, hergestellt nach dem Verfahren gemäss einem der vorstehenden Ansprüche.

11. Guarkernmehl gemäss Anspruch 10, dadurch gekennzeichnet, dass die bei einer Wellenlänge von 500 nm gemessene Transparenz einer 0,5%-igen Lösung 94% ist

12. Guarkernmehl gemäss Anspruch 10 oder 11, zur Verwendung als Verdickungsmittel und Stabilisator in Nahrungsmitteln.

## Claims

1. Process for producing guar gum powder, characterized in that it comprises the following steps:
(a) treating guar splits with concentrated sulphuric acid, the amount of sulphuric acid used being 5 to 20 per cent by weight;
(b) washing the acid-treated splits once or repeatedly with water and/or neutralizing with an aqueous alkaline solution;
(c) treating the splits with an aqueous alkaline solution;
(d) washing the splits with water; and
(e) dehydrating the splits with an aqueous alcohol solution.

2. Process according to Claim 1, characterized in that the acid for treating the splits in step (a) is sulphuric acid at a concentration of 70% to 96%.

3. Process according to Claim 1, characterized in that the acid for treating the splits in step (a) is sulphuric acid at a concentration of less than 70%.

4. Process according to one of the preceding claims, characterized in that the aqueous alkaline solution in step (b) is an aqueous sodium hydroxide solution.

5. Process according to one of the preceding claims, characterized in that the alkaline solution- in step (c) is sodium hydroxide solution at a concentration of 20-40 per cent by weight or 23-30 per cent by weight.

6. Process according to one of the preceding claims, characterized in that the aqueous alcohol solution of step (d) is an aqueous solution of methanol, ethanol or isopropyl alcohol.

7. Process according to one of the preceding claims, characterized in that the resultant splits are subjected in a step (f) to a neutralization in which they are treated with a solution of an organic acid, such as citric acid, tartaric acid, formic acid or acetic acid.

8. Process according to one of the preceding claims, characterized in that the splits, subsequently to step (e), are dried and are then moistened to 60-80% or 70% based on the dry weight.

9. Process according to one of the preceding claims, characterized in that the splits used in step (a) have a protein content of 4.2 per cent by weight and a content of non-acid-hydrolysable matter of 1.8 per cent by weight.

10. Guar gum powder which, as a 1% strength aqueous solution, has a viscosity of 45 to 10,000 mPa.s, which has a content of proteins and non-acid-hydrolysable matter of in total 0.8 to 0.9% and which, as a 0.5% strength aqueous solution, has a transparency measured at a wavelength of 500 nm of at least 70%, produced by the process according to one of the preceding claims.

11. Guar gum powder according to Claim 10, characterized in that the transparency of a 0.5% strength solution measured at a wavelength of 500 nm is 94%.

## Revendications

1. Procédé destiné à la fabrication de farine de graines de guar, caractérisé en ce qu'il comporte les phases suivantes :
(a) traitement d'éclats de guar avec de l'acide sulfurique concentré, la quantité d'acide sulfurique utilisé étant de 5 à 20 % en poids ;
(b) lavage à l'eau à une ou plusieurs reprises des éclats traités à l'acide et/ou neutralisation avec une solution alcaline aqueuse ;
(c) traitement des éclats avec une solution alcaline aqueuse ;
(d) lavage à l'eau des éclats ; et
(e) déshydratation des éclats avec une solution alcoolisée aqueuse.

2. Procédé selon la revendication 1, caractérisé en ce que l'acide destiné au traitement des éclats dans la phase (a) est de l'acide sulfurique d'une concentration de 70 % à 96 %.

3. Procédé selon la revendication 1, caractérisé en ce que l'acide destiné au traitement des éclats dans la phase (a) est de l'acide sulfurique d'une concentration inférieure à 70 %.

4. Procédé selon l'une quelconque des revendications précédentes, caractérisé en ce que la solution alcaline aqueuse de la phase (b) est une soude caustique aqueuse.

5. Procédé selon l'une quelconque des revendications précédentes, caractérisé en ce que la solution alcaline aqueuse de la phase (c) est de la soude caustique d'une concentration de 20 à 40 % en poids, ou de 23 à 30 % en poids.

6. Procédé selon l'une quelconque des revendications précédentes, caractérisé en ce que la solution alcoolisée aqueuse de la phase (d) est une solution aqueuse de méthanol, d'éthanol ou d'isopropanol.

7. Procédé selon l'une quelconque des revendications précédentes, caractérisé en ce que les éclats obtenus sont soumis dans une phase (f) à une neutralisation, au cours de laquelle ils sont traités avec une solution constituée d'un acide organique tel que de l'acide citrique, de l'acide tartrique, de l'acide formique ou de l'acide acétique.

8. Procédé selon l'une quelconque des revendications précédentes, caractérisé en ce que les éclats sont séchés suite à la phase (e), et sont ensuite humidifiés à 60-80 % ou à 70 % rapportés au poids à l'état sec.

9. Procédé selon l'une quelconque des revendications précédentes, caractérisé en ce que les éclats utilisés dans la phase (a) ont une teneur en protéines de 4,2 % en poids, et une teneur en matières non hydrolysables par de l'acide de 1,8 % en poids.

10. Farine de graines de guar qui, en tant que solution aqueuse à 1 %, présente une viscosité de 45 à 10'000 mPa.s, dont la teneur en protéines et en matières non hydrolysables par de l'acide est au total de 0,8 à 0,9 %, et qui, en tant que solution aqueuse à 0,5 %, présente une transparence mesurée à une longueur d'onde de 500 nm d'au moins 70 %, fabriquée selon le procédé suivant l'une quelconque des revendications précédentes.

11. Farine de graines de guar selon la revendication 10, caractérisée en ce que la transparence d'une solution à 0,5 % mesurée à une longueur d'onde de 500 nm est de 94 %.
